Europäisches Patentamt

European Patent Office

Office européen des brevets

(11) Publication number: **0 331 453 B1**

# EUROPEAN PATENT SPECIFICATION

(45) Date of publication of patent specification: **01.06.94**    (51) Int. Cl.⁵: **B60C 9/08**, B60C 3/04, B60C 11/00

(21) Application number: **89302014.9**

(22) Date of filing: **28.02.89**

(54) **Heavy duty high speed radial tyre.**

(30) Priority: **29.02.88 JP 47904/88**
**06.02.89 JP 28256/89**

(43) Date of publication of application:
**06.09.89 Bulletin 89/36**

(45) Publication of the grant of the patent:
**01.06.94 Bulletin 94/22**

(84) Designated Contracting States:
**DE FR GB**

(56) References cited:
**WO-A-80/00069**
**DE-A- 3 614 764**
**DE-C- 3 611 222**
**FR-A- 2 437 945**
**GB-A- 2 092 963**

(73) Proprietor: **SUMITOMO RUBBER INDUSTRIES, CO. LTD**
**No. 1-1, Tsutsui-cho 1-chome**
**Chuo-ku Kobe-shi Hyogo-ken 651(JP)**

(72) Inventor: **Noma, Hiroyuki**
**16-3 Suzurandai Kitamachi 3 chome**
**Kita-ku**
**Kobe-shi Hyogo-ken(JP)**
Inventor: **Kawamura, Kazuhiko**
**3-1-45 Suigencho**
**Toyota-shi Aichi-ken(JP)**
Inventor: **Nishida, Yasuo**
**3-2-912 Saenbacho**
**Akashi-shi Hyogo-ken(JP)**
Inventor: **Ueyoko, Kiyoshi**
**2-10-2 Fukaeminami**
**Higashinari-ku**
**Osaka-shi Osaka-fu(JP)**

(74) Representative: **Stewart, Charles Geoffrey**
**SP TYRES UK LIMITED**
**Tyre Technical Division**
**Fort Dunlop, Erdington, Birmingham B24 9OT**
**(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

The present invention relates to a radial tyre for heavy duty and high speed use particularly suitable for aircraft.

For heavy duty high speed tyres, particularly for aircraft tyres, cross ply constructions in which the carcass plies are arranged so as to cross each other are used widely.

However, aircraft tyres of such cross ply construction are poor in respect to the rigidity of their tread region, and also are heavy. Both these properties are unfavourable for wear or abrasion resistance and heat generation. Therefore, aircraft tyres of cross ply construction are limited in their usability especially now when aircraft are greatly increasing in performance and weight such as for example the jumbo jet planes of recent years.

For this reason, radial ply tyres having a radial carcass in which carcass cords are arranged radially of the tyre and a tread reinforcing belt of cords arranged at a small angle to the tyre equator and disposed radially outside the carcass, have become more generally used. This also is because of the need to undergo higher speed and greater loads and also larger impacts at the time of the take off or landing of the aircraft. To effectively absorb the impact produced at the times of the take off or landing of the aircraft, the tyre must be designed to absorb a great deflection in the radial direction of the tyre and in practice this on load radial deflection of the aircraft tyres may be for example, 28% to 35%.

Thus heavy duty high speed tyres for aircraft are now required to endure repeated large deformation, great loads and high speeds so that they provide for safe take off and landing of the aircraft.

Whilst tyre service life is increased by using a radial construction, the local durability of their bead regions is found to be low compared to the durability of the full tyre. Also such radial tyres are found to suffer more easily from the standing wave phenomenon.

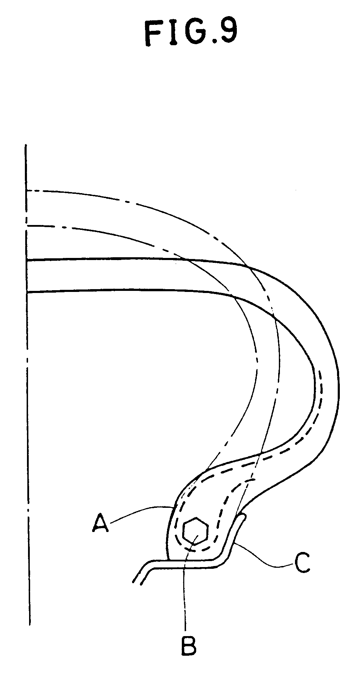

The fact to be noted in connection with the durability of the bead regions is that if the on load radial deflection of the tyre is as great as 20 to 35% as described above then as shown in Fig.9 the cords of the carcass A are subjected to a compressive stress in their axially outside region (in Fig.9 the carcass turnup portion around the bead core B), and contrarily in the axially inner region they are subjected to tension.

Further, it has been found that the bead regions are liable to be damaged in the region contacting the rim flange C. A drum test has shown the cause of this damage to be as will now be described.

On severe deflection under load the bead portions are abruptly bent around the upper edge of the rim flange C. The resultant compression produces stress concentration in the bent portion of the bead region, and also creates a great compressive stress on the carcass cords in the bent region. This compressive stress greatly fatigues the carcass cords because the stresses are repeated as the tyre rotates.

At the cut ends of the carcass cords there is further local concentration of compressive stress in the bead regions and as a result of the action of such repeated compressive stresses upon the carcass cords, the rubber material around the carcass cords may fail as well as the carcass cords and both lead to damage of the bead region.

Furthermore, research was also carried our by the inventors upon the standing wave phenomenon.

The standing wave phenomenon is because a tyre undulates in its tread portion when running at a very high speed. The undulating motion of the tread portion is transmitted to the sidewall portions of the tyre and this vibrates the bead portions, and as a results, the bead portions are subjected to repeated compressive stress which again reduces their durability.

In heavy duty high speed radial tyres for aircraft, this deformation is very great and they are subjected to heavy loads which require an increase in the internal air pressure sometimes twice the regular internal air pressure. Also the running speed is very high often more than 300km/h at the time of take off or landing and this makes more likely the occurrence of the standing wave phenomenon.

It is therefore seen that improvement in the durability of the bead regions requires an increase in the critical rotating speed at which the standing wave phenomenon begins so as to minimise the occurrence of the standing wave phenomenon in order to achieve this increase.

The critical rotating speed of a radial tyre at which the standing wave phenomenon is created is given by the following well known Formula (1).

$$Vc = \sqrt{T/m + 2\sqrt{E1 \times k}} \ / \ m \ \ldots \ldots \ldots (1)$$

where

Vc = Critical rotating speed of the tyre over which the standing wave phenomenon is created

m = Mass per unit length of the tread portion

E1 = Rigidity of the tread portion against bend thereof within the limit's of the thickness thereof

T = Tension of the belt

K = Spring constant of the carcass

This Formula (1) is based on the assumption that the belt layer is a beam of infinite length which is elasticity supported by means of the carcass.

It can be seen that in order to increase the critical rotating speed of the tyre over which the standing wave phenomenon is introduced, the foregoing mass m should be decreased, while on the other hand, the foregoing rigidity E1, the belt tension T and the spring constant k of the carcass, must be increased, However, it is very hard to greatly reduce the mass m.

Therefore, the present invention is intended to increase the critical rotating speed Vc of the tyre over which the standing wave phenomenon is generated, without utilising any substantial decrease in the mass m in such manner to increase the natural frequency of the belt layer by exerting a greater tension T upon the belt layer when the tyre is inflated. In practice, it was found by the inventors that this also can increase the apparent rigidity E1 of the tread portion against bending within the limits of the thickness thereof, to achieve a further enhancement of the foregoing critical rotating speed Vc. On the other hand, the foregoing Formula (1) is established upon an assumption that the tension T applied to the belt layer is even at any portion thereof.

However, it was found by the inventors that it is most effective to increase the belt tension T especially at the crown region of the tread portion to increase the critical rotating speed of the tyre over which the standing wave phenomenon is created, and also that in order to increase the belt tension R at the crown region, the region should be arranged to be furnished with a greater on load elongation. Further, the increase in the elongation of the tread crown region was concomitantly found to bring also an effect in which the contact pressure of the tread surface with the ground can be equalised in its distribution.

In connection with the belt tension T of the crown region, the inventors investigated the relationship between the radius of curvature of the tread profile in a tyre section in the axial direction of the tyre and the critical; rotating speed of the tyre over which the standing wave phenomenon is introduced. As a result, they discovered that if the radius of curvature of the tread profile is increased to be greater than the radius conventionally applied thereto, that is, it is increased to more than 800 mm, the belt tension of the crown region can be effectively increased, this provides a rise in the critical rotating speed of the tyre over which the standing wave phenomenon is brought about.

Also it was found that by such an increase in the radius of curvature the distribution of the contact pressure of the tread surface on the ground is equalised at the same time.

It is therefore, a general object of the present invention to provide a heavy duty high speed radial tyre which has an improved bead durability.

According to the present invention a heavy duty high speed radial tyre comprises a radial carcass having at least one ply of cords arranged at an angle of 70 to 90 degrees to the tyre equator, and turned up at both edge portions around a pair of bead cores respectively to be secured thereto, and a belt layer comprising a plurality of plies of cords arranged at an angle of 0 to 20 degrees to the tyre equator characterised in that each of the carcass cords has an elongation S5 under 5 kgf load of 5 to 8%, an elongation S10 under 10 kgf load of 9 to 15% and an elongation S20 under 20 kgf load of 14 to 20%, wherein the rate of change of the elongation decreases smoothly as the load increases, the initial modulus of elasticity of each carcass cord is 130 to 200 kgf/mm$^2$, and the number of twists of each carcass cord is 25 to 36T/10cm.

Further aspects of the present invention will become apparent from the following description, by way of example only, of some embodiments of the invention in conjunction with the following diagrammatic drawings in which:-

Fig.1 is a sectional view showing one embodiment of the present invention;

Figs.2A and 2B are diagrams showing the elastic properties of the elastic cords;

Fig.3 is a diagrammatic view showing a variation in the tread profile thereof.

Fig.4 is a sectional view showing another embodiment of the present invention which is provided with an auxiliary belt layer

Fig. 5 is a sectional view showing the belt ply and the auxiliary belt ply

Fig.6 to 8 are schematic sectional views showing modifications of the auxiliary belt layer

Fig.9 is a diagram showing deformation of a tyre.

Fig 10. is a diagram for explaining the definition of the initial elastic modulus of the elastic cord.

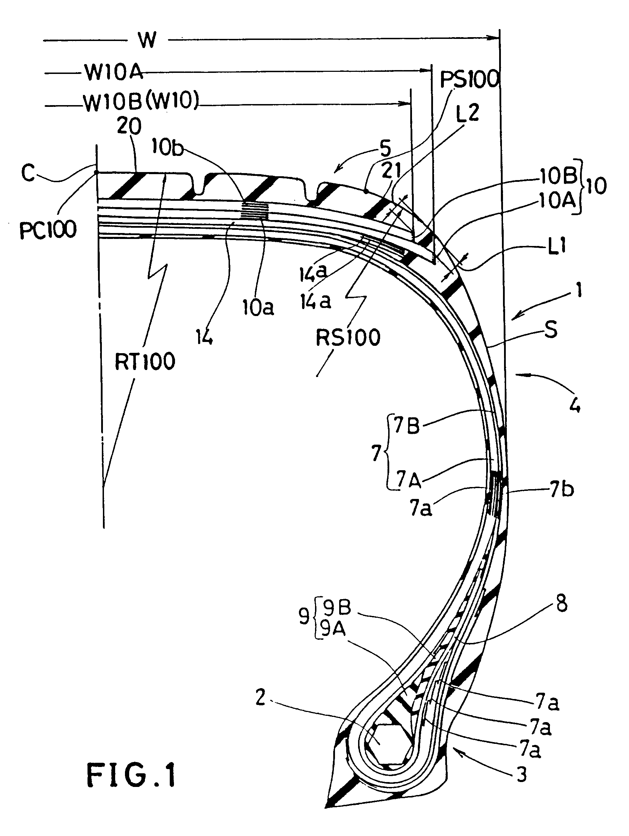

In Fig.1 a tyre is shown which is inflated to its regular internal air pressure. The tyre 1 has a pair of bead portions 3 each provided with a bead core 2, a pair of sidewalls 4 extending radially outwardly one from each bead portion 3, and a tread portion 5 extending between the outside edges of the sidewalls 4.

Moreover, the tyre 1 comprises a carcass 7 extending between the bead portions the tread portion 5 being disposed radially outside the carcass 7.

The carcass 7 comprises an inner layer 7A and an outer layer 7B.

The inner layer 7A is composed of a plurality of plies of parallel cords, for example four plies 7a, which plies are turned up around the bead cores 2 from the inside to the outside thereof.

The outer layer 7B is also composed of a plurality of plies of parallel cords, for example, two plies 7b, which plies are turned up around the bead core 2 from the outside to the inside thereof in such a manner that the outer layer encloses the turnup portions of the inner layer 7A.

The main portion of each carcass ply extends continuously through the sidewalls 4 and the tread portion 5 and thus the carcass extends between the bead cores 2.

The carcass plies (7a, 7b) are arranged radially of the tyre, that is, the carcass ply cords are laid radially at 70 to 90 degrees to the tyre equator. In this embodiment, the cords of the successive carcass plies are tilted alternatively with respect to the radial direction of the tyre so that the cords of each ply intersect the cords of the next carcass ply.

In order to prevent any abrasion of the parts of the carcass 7 which are moved in a U-shaped configuration around the bead cores 2 as a result of repeated high load deformation of the tyre, a covering layer or reinforcing layer 8 is provided between the carcass 7 and the bead core.

The bead portions 3 are each provided with a bead apex 9. The bead apex 9 is made of rubber and is tapered and disposed radially outside the bead core 2. The bead apex 9 extends radially outwardly beyond the highest edge of the above mentioned covering layer 8. Therefore, the deflective stresses caused by the bend of the carcass turnup is dispersed.

In this embodiment, the bead apex 9 comprises a stiffer region 9A made of a hard rubber which forms a lower portion thereof, and a buffer region 9B made of a soft rubber which forms an upper portion thereof.

Further, each bead portion 3 is provided with a chafer (not shown) along the outside surface thereof to prevent wear caused by direct contact with the rim.

The tread portion 5 is reinforced inside by a belt 10 located radially outside the carcass 7 and inside the main tread 5 and is further provided with a cut breaker 14 disposed between the belt layer 10 and the carcass 7 to enhance cornering force generation.

The cut breaker 14 comprises at least one ply, for example two plies 14a, of parallel cords arranged at an angle of 10 to 45 degrees to the tyre equator. This cut breaker 14 extends in close contact with the carcass 7 in the crown region 20, namely, the middle portion of the tread in the centre of which the equator line of the tyre extends. However, the cut breaker is gradually spaced apart from the carcass from the edges of the crown region toward the outside thereof. Both outer edges of the cut breaker 14 are terminated at positions which provide a breaker width approximately 70 to 85% and preferably approximately 73 to 78% of the overall width W of the tyre.

The above mentioned belt 10 comprises a plurality of plies of parallel cords each arranged at angle of 0 to 20 degrees and more preferably 0 to 10 degrees to the tyre equator. In this embodiment those plies make up an inner layer 10A and an outer layer 10B.

The inner layer 10A comprises a plurality of plies of parallel cords 11, for example four plies 10a, and the outer layer 10B comprises a plurality of plies of parallel cords 11, for example four plies 10b.

The inner layer 10A contacts the cut breaker 14 in the crown region 20, but, is gradually spaced from the cut breaker. The outside edges are extended axially outwardly beyond the outside edges of the cut breaker 14.

The width W10A of the inner belt layer 10A is 75 to 85% of the overall width W of the tyre.

The smallest distance L1 between the outside edge of the inner belt layer 10A and the outer surface S of the tyre is in a range of 3 to 15mm more preferably in a range of 3 to 8mm.

The outer belt layer 10B is in close contact with the inner belt layer 10A.

The width W10B of the outer layer 10B is in a range of 75 to 80% of the overall width W of the tyre.

The outside edge of the outer belt layer 10B is positioned between the outside edge of the above mentioned cut breaker 14 and that of the inner belt layer 10A in the axial direction of the tyre. The smallest distance L2 between the outside edge of the outer belt layer 10B and the outside surface S of the tyre is substantially identical with the above mentioned distance L1.

Incidentally, the width of the cut breaker 14 may be greater either than the width W10B of the outer belt layer 10B or than the width W10A of the inner belt layer 10A.

In this embodiment, the carcass cords of the carcass plies have a thickness D11, which is relatively great, for example, 1260d/2 to 2700d/3.

The carcass cord is particularly chosen to be a high extensibility elastic cord having elastic properties as follows:-

the elongation S5 of the cord when loaded with 5 kgf/cord is 5 to 10% more preferably 5 to 8%.

the elongation S10 of the cord when loaded with 10 kgf/cord is 9 10 15% more preferably 9 to 12% and

the elongation S20 of the cord when loaded with 20 kgf/cord is 14 to 20%

The above mentioned definition is for the elastic cord itself, and more generally it is expressed as follows:-

the quotient D5 of the elongation S5 under 5 kgf load as a percentage divided by the thickness of the cord in denier is in a range of $7.35 \times 10^{-4}$ to $14.7 \times 10^{-4}$

the quotient D10 of the elongation S10 under 10 kgf load in percentage divided by the thickness of the cord in denier is in a range of $13.2 \times 10^{-4}$ to $22.1 \times 10^{-4}$ the quotient D20 of the elongation S20 under 20 kgf load in percentage divided by the thickness of the cord in denier is in a range of $20.5 \times 10^{-4}$ to $29.4 \times 10^{-4}$

The above mentioned double definition provides a first definition for the cord particularly suitable for aircraft tyres especially the tyre for jumbo jet planes, and a second definition in terms of the elongation per denier is suitable for various kinds of heavy duty high speed tyres.

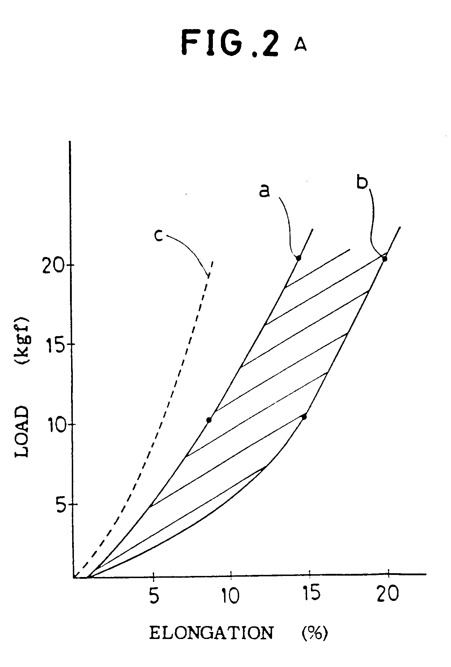

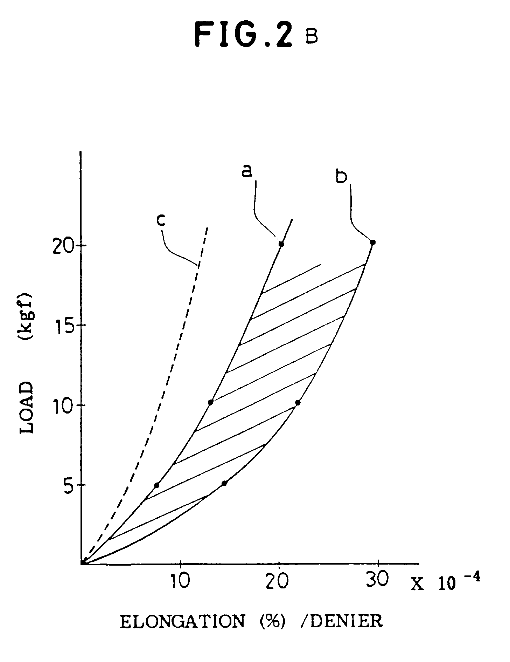

Such an elastic cord has elastic properties as defined between the curves (a) and (b) drawn in Fig. 2A and Fig. 2B.

As shown by these curves (a and b) the elastic cords have a characteristic such that the percentage elongation is large under a smaller load, but it decreases for an increase in the load.

Accordingly, the carcass cords having such elastic properties are greatly elongated during the initial stage of tyre inflation as the cord load is increased, but when the cord load is increased up to 10 kgf, the elongation percentage is gradually decreased although the cords are elongated by the increase in the cord load.

Incidentally, the curve (c) in Figs. 2A and 2B shows the elastic properties of a conventional tyre cord, and this curve is found to be steep in slope and substantially linear as compared to the curve (a). therefore, when such a conventional cord is used for the carcass cords, it does not provide for mitigation of the compressive strain caused by tyre deflection. Accordingly, adequate bead durability is not provided by the conventionally used tyre cords.

Further, the initial elastic modulus Es of the elastic cords is in a range of 130 to 300 kgf/sq.mm more preferably 140 to 170 kgf/sq.mm. That is, the initial elastic modulus Es of the elastic cords is small as compared with that of the conventionally used cords, whereby the elastic cords have a higher extensibility to fully increase the elongation of the carcass cords.

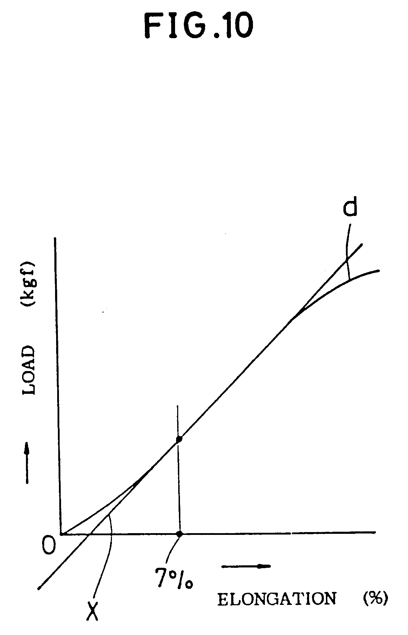

In the present invention, the initial elastic modulus Es means the elastic modulus at 7% elongation, that is, as shown in Fig.10, the slope (%/kgf) of the tangent X to the Load Elongation curve (d) at 7% elongation.

Then again the load at breakage of the elastic cord is preferably not less than 30 kgf and more preferably in a range of 40 to 60 kgf.

Such elastic cords may comprise one or more kinds of cords selected from nylon cords, polyester cords, aromatic polyamide cords, carbon cords or metallic cords.

In the case of the organic fibre cords being used for the elastic cords, the foregoing required elastic properties can be obtained by greatly reducing the tension, which is applied to the cords together with heat for a specified time, in a process called dip stretching as compared with the tension used in the conventional dip stretching process.

Also, if for example, nylon cords are used to provide the above mentioned elastic property, the number of twists is increased to 25 to 36 T/10cm and more preferably 27 to 30 T/10cm as compared with the conventional number of the twists which is approximately 23 T/10cm.

In addition to the above mentioned physical treatment, the above mentioned elastic properties can be obtained by another means. The elastic cord can be made of low extensibility by providing slack in advance by, for example, coiling these members with high extensibility members. In this case, when the load increase to a predetermined value, the elastic cord has the low extensibility members being part of the load, and accordingly, the cord as a whole can be reduced in extensibility above that value.

It was verified that the application of such elastic cords to the carcass cords is capable of forming a tyre which has a carcass with a higher extensibility in which the cords have a 6% or more elongation and more preferably an elongation of approximately 8 to 9% when the tyre is inflated to the regular internal air pressure.

The carcass cords are embedded in a base rubber to form the foregoing carcass plies 7a, 7b The base rubber is a rubber which has as strength and a low heat generating property and allows the above mentioned elastic property from the elastic cords.

The 100% modulus thereof is 30 to 70 kgf/sq.cm and the elongation at breakage is 200 to 500% more preferably 300 to 600%. In the case where the 100% modulus is less than 30 kgf/sq.cm, the heat generation becomes too great, and if it is more than 70 kgf/sq.cm, the strength of the base rubber is liable to decrease be inadequate. In the case of the elongation at breakage being less than 200% the rubber lacks extensibility and causes rubber failure when the carcass is deformed, and the heat generation has a tendency to increase if it becomes more than 500%.

The base rubber consists of 100 parts by weight of the base including at least one kind of rubber selected from natural rubber and isoprene rubber and 50 to 70 parts by weight of carbon black. When the carbon black is less than 50 parts by weight, the strength of the base rubber becomes insufficient, and if more than 70 parts by weight, the heat generation thereof shows a tendency to increase.

If the carcass cords are thus furnished with greater extensibility than in conventional tyres, it is feasible to decrease a compressive stress and a compressive strain which are created on the rim flange side portion of the carcass cords as a result of the bending operation of the bead portion at the time of taking off or landing, whereby the carcass cords are prevented from their deformation, local bend, breakage which can be caused by their failure resulting from their compressive strain, and the like.

Also, the carcass cords having such a high extensibility can mitigate the compressive stress upon the rubber itself of the bead portion 3, to thereby achieve as modulus a 10 percent or more improvement in bead durability.

Further, by using such elastic cords for both the carcass cords and the belt cords 11, the amount of the expansion of the above mentioned crown region of the tread surface when the tyre is inflated to its regular internal air pressure, can be increased to more than 5% as based on the state where the tyre is inflated to 5% of the regular internal air pressure.

Moreover, this can enhance the tension T of belt cords 11 and thus to raise the critical rotating speed of the tyre over which the standing wave phenomenon begins.

The critical rotating speed Vc over which the standing wave phenomenon is brought about is given by the following formula (1) as described in the foregoing.

$$V_C = \sqrt{T/m + 2\sqrt{E1 \times k} / m} \quad \ldots \ldots \ldots (1)$$

where
Vc = critical; rotating speed of the tyre over which the standing wave phenomenon is created
m - Mass par unit length of the tread portion
E1 = Rigidity of the tread portion against bend thereof within the limits of the thickness thereof
T = tension of the belt
k = Spring constant of the carcass
Thus, the increase in the belt tension T of the invention enhances the apparent rigidity E1 of the tread portion, and consequently, raises the critical rotating speed Vc, thereby preventing the occurrence of the standing wave phenomenon.

As a result, the deformation of the bead portions and an increase in the compressive stresses upon the bead portions are both obviated, because the bead portion is not subjected to undulating type stresses which are transmitted from the tread portion 5 through the sidewalls 4 if the standing wave phenomenon is introduced. this restrains deterioration of the durability of the bead portion.

Further, as described in the foregoing, the elastic cord as used for the carcass cord and the belt cord, decreases in elongation percentage with increase in applied load thereby preventing over expansion caused by 4 great centrifugal force at high speed and what is called tyre growth in which the tread portion particularly in the crown region remains permanently expanded.

The belt cord 11 and the cut breaker cord have preferably elastic properties which are similar to that of the carcass cord in view of the relationship between the elongation and the load to increase the belt tension in the crown region of the tread portion, that is, to increase the critical rotating speed of the tyre over which the standing wave phenomenon is made.

The elongation S5 at 5 kgf load, of the belt cord 11 is smaller than that of the carcass cords, and is in a range of 3 to 6% and the quotient D5 of the elongation S5 under 5 kgf load as a percentage divided by the thickness of the belt cord in denier is in a range of $3.85 \times 10^{-4}$ to $7.69 \times 10^{-4}$.

Additionally the quotient D10 of the elongation S10 of each belt cord when loaded with a 10 kgf load as a percentage divided by the thickness of the belt cord in denier is $6.41 \times 10^{-4}$ to $10.26 \times 10^{-4}$ and the

quotient D20 of the elongation S20 of the belt cord when loaded with a 20 kgf load as a percentage divided by the thickness of the carcass cord in denier is $10.26 \times 10^{-4}$ to $59 \times 10^{-4}$.

The cut breaker cord has substantially the same elastic properties as those of the belt cord. The material of the breaker cord may however differ from that of the belt cord or be the same.

The belt cord 11 and the carcass cord have the same thickness D11, and this thickness is relatively great, for example, 1260d/2 to 2700d/3.

The belt cords 11 and the breaker cord are respectively embedded in a base rubber similar to that of the carcass to form the belt plies 10a, 10b and the cut breaker plies 14a. The use of a base rubber having similar properties to those of the carcass ply further facilitates the stretch of the belt cords embedded therein.

Accordingly, when the tyre is normally inflated, the cords in the bead portions can easily have a greater pre-tension or stretch, and the tread portion 5 is readily allowed to expand in the crown region.

In addition, the greater elongation at breakage of the elastic cords improves the durability of the bead portion, and prevents the occurrence of the standing wave phenomenon.

The belt plies 10a, 10b are formed by applying green plies in which the belt cords 11 are embedded in the base rubber, around the carcass such that the belt cords are inclined at 0 to 20 degrees to the tyre equator. In the belt 10, the cord arrangement angles can be changed between each layer of the layers 10a and 10B and/or between each ply 10a and 10b.

Moreover, the belt layer 10 may be found into an endless type by spirally winding one to several cords, that is, by using what is called the cord winding method.

The cords of each breaker ply 14a are inclined at an angle of 10 to 30 degrees to the tyre equator. the plies 14a of the cut breaker has a structure identical with those of the belt plies 10a and 10b. The cords of the cut breaker may differ from the belt cords in terms of their materials, if the elastic properties are similar each to the other.

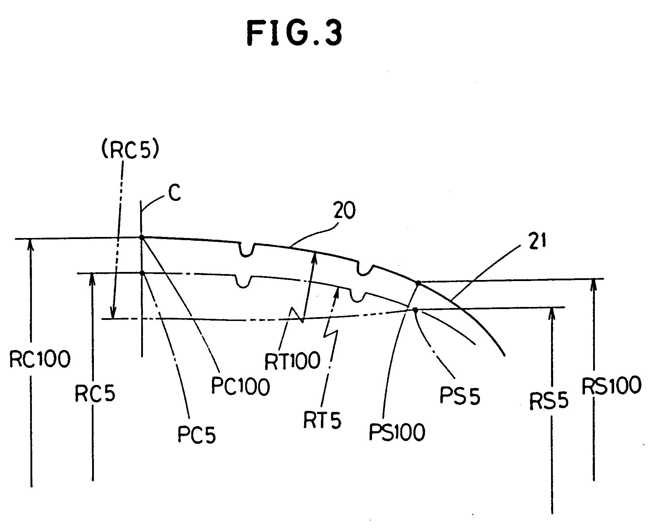

In the heavy duty high speed radial tyre 1 of the present invention, as shown in Fig.3 the tread profile is formed to meet the following condition: the ratio RC100/RC5 of the radius RC100 to the radius RC5 is not less than 1.06;
where RC100 and RC5 are the radii of the tyre at the tread surface on the tyre equator when the tyre is inflated to 100% and 5% of the regular internal air pressure, respectively.

The 5% internal air pressure is to allow the reproduction of the sectional shape of the tyre in its vulcanising mould.

Thus the expansion around the tyre equator C due to the inflation to the regular internal air pressure, is arranged to be greater than that in conventional tyres, so that the tread portion 5 is subjected to circumferential tension created along the tyre equator, and accordingly, a great belt tension T acts resistedly the above mentioned belt cords 11.

Moreover, in the tyre 1, the ratio (RC100-RS100)/RC100 of the difference RC100-RS100 to the radius RC100 is set to be not less that 0.02, wherein RC100-RS100 is the difference of the above mentioned radius RC100 from the radius RS100 of the tyre at the tread surface on the edge PS100 of the crown region 20 under the normal state in which the tyre is inflated to its regular internal air pressure. Here, the width of the crown region 20 is 60 to 90% of the width of the tread portion 5.

As illustrated in Fig.1 in the heavy duty high speed radial tyre 1 designed particularly for the use of aircraft, the tread surface when the tyre is inflated to the regular internal air pressure is made up of the above mentioned crown region 20 with the comparatively large radius RC100 and a pair of shoulder regions 21 with the relatively small radius RS100 located one on each side of the crown region 20.

As defined by the foregoing ratios, the radius RC100 is larger than the radius RS100. Accordingly, the expansion is greater in the crown region 20 especially in the centre RC100 thereof than in the shoulder regions 21.

In the above mentioned formula (1), it is assumed that the belt tension T is even at any portion thereof. The inventors, however, demonstrated that the critical rotating speed over which the standing wave phenomenon is produced can be increased by increasing the amount of expansion of the crown region so as to increase the belt tension T in this region.

Then the occurrence of the standing wave phenomenon is effectively lessened, and the bead durability is improved.

Such a configuration of the tyre to produce the foregoing effect is obtained by suitably designing the shape of the vulcanising mould.

The tyre of this configuration was also found to provide an even distribution of contact pressure of the tread surface on the ground.

Moreover, in a tyre section including the tyre axis when the tyre is inflated to 50% of the regular internal air pressure, the tread surface can be formed into either a crown swelling profile in which the radius RC5 at the tyre equator C (PC5) is larger than the radius RS5 at the edge (PS5) of the crown region 20 or a crown sinking profile in which the radius RC5 is smaller than the radius RS5.

If the above mentioned crown swelling profile is employed for the tread surface when the tyre is inflated to 5% of its regular internal air pressure like this embodiment, the tread surface is formed such that its region PS5-PC5-PS5, that is, the crown region 20 becomes an arc having a radius of curvature RT5, and this radius of curvature RT5 is set to be not less than 800 mm although in conventional tyres particularly for aircraft it has always been under 800mm.

By setting the radius of curvature like this, a further increment in the expansion of the crown region 20 is obtained, which increases the belt tension T in the crown region 20 and evens up the ground pressure distribution. As a result, the critical rotating speed over which the standing wave phenomenon is produced can be further increased.

In order to achieve such a result, the tread surface does not always need to be formed into the above mentioned crown swelling profile in which the radius RC5 is larger then the radius RS5. It can be formed into the crown sinking profile in which the RC5 is smaller than the RS5 as illustrated by means of a three dotted chain line in Fig.2.

Such an arrangement of the tyre 1 can raise by approximately 8% the critical rotating speed over which the standing wave phenomenon is introduced, and also enhance the durability of the bead portion.

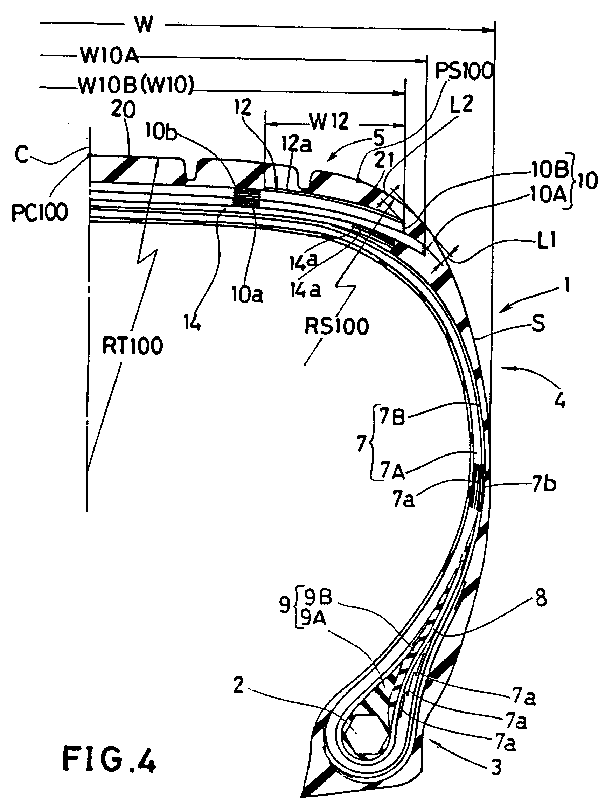

Fig.4 shows another embodiment of the present invention in which an auxiliary belt layer comprising a pair of auxiliary belts 12 are disposed radially outside the belt layer 10.

In Fig.4 each of the auxiliary belts 12 is a single ply 12a of parallel cords. The widths W12 of the auxiliary belt 12 is 10 to 35% of the maximum width of the belt layer 10, which is in effect the width W10a of the inner belt layer 10A.

The axially outer edge of the auxiliary belt layer or the above mentioned ply 12a is located near that of the belt layer 10, and in this embodiment it coincides with the edge of the outer belt layer 10B. Thereby the inside edge thereof is extended axially inwardly beyond the edge of the crown region 20.

The thickness d13 of the cords 13 of the auxiliary belt ply 12a is smaller than the above mentioned thickness d11, for example approximately 300 to 1350 d/3, and is in a range of 20 to 50% of d11.

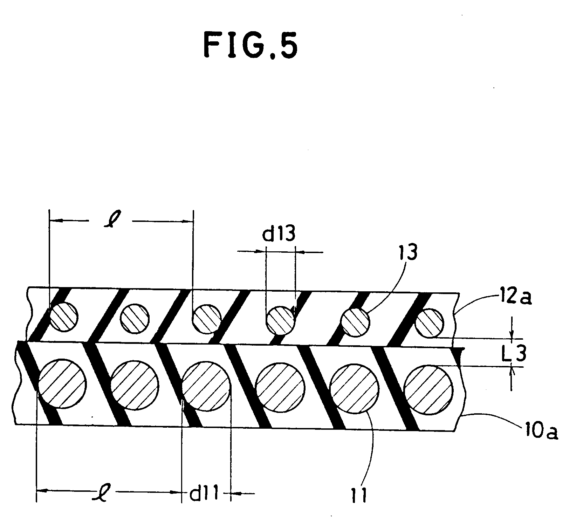

The auxiliary belt ply 12a is brought into close contact with the uppermost belt ply 10b of the belt layer 10, as shown in Figs.5 but it is required to arrange the auxiliary belt cords 13 so as not to contact the belt cords 11. The distance therebetween, more specifically, the distance L3 between the radially innermost edges of the auxiliary belt cords 13 and the radially outermost edges of the belt cords 11 of the uppermost belt ply 10b is in a range of 0.2 to 1.0mm.

In order to meet this requirement, the base rubber of the belt ply 10b and the base rubber of the auxiliary belt ply 12a are formed is slightly greater thickness than the cord thickness d11 and d13, respectively.

In the case where the auxiliary belt layer 12 is used like this embodiment, the ply cord density in the belt layer 10 and that in the auxiliary belt layer 12 are set in a range of 50 to 85% and in a range of 35 to 65% respectively, where the ply cord density is defined for every ply as the percentage of the sum of the thickness of the cords which are included in a unit length 1 in the perpendicular direction to the longitudinal direction of the cords or the cord extending direction to this unit length 1. That is, in the belt plies 10a and 10b, the ply cord density is $\Sigma$ d11/1x100, and in the auxiliary belt ply 12a, the ply cord density is $\Sigma$ d13/1x100. Furthermore, the ply cord density in the auxiliary belt layer 12 is set to be smaller than the ply cord density in the belt layer 10, and the ratio of the former to the later is set in a range of 0.35 to 0.8. Still furthermore, the cords 13 of the auxiliary belt layer are laid at an angle of 0. t0 20 degrees to the tyre equator.

The auxiliary belt layer 12 arranged in thus way is small in rigidity and great in extensibility compared to the belt layer 10.

Therefore, the tension exerted upon the tyre when inflated is mainly taken by the belt layer 10 and the carcass 7, and the auxiliary belt layer 12 can mitigate any step difference between the rigidity of the belt layer 10 and the rigidity of the tread rubber because the auxiliary belt layer 12 is interposed therebetween. Under such circumstances, the shearing stress between the tread rubber 5 and the belt layer 10 caused by inflation of the tyre and contact of the tread surface with the ground, is received and mitigated by means of the auxiliary belt layer 12.

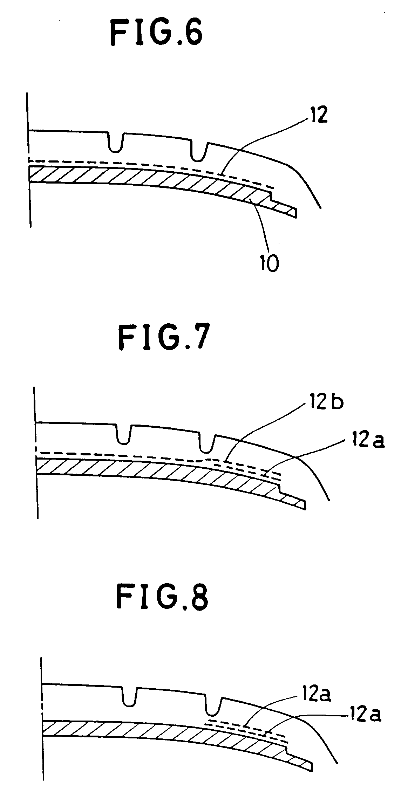

Figs.6 to 8 show modifications of the auxiliary belt layer. The auxiliary belt layer in Fig. 6 comprises a single full width belt ply 12 extended all over the width of the belt layer 10. That in Fig.7 comprises a pair of belt plies 12a disposed in the tread shoulders and a single full width belt ply 12b disposed thereon so as to cover the upper surface of the belt layer 10.

Also, the auxiliary belt layer in Fig.8 comprises a pair of shoulder belts disposed in the tread shoulders and each composed of two plies 12a of cords.

Table 1 shows the results of comparison tests, wherein, test tyres of size 46x17R20 were made as working example tyres of the invention and a reference tyre. The test tyres had substantially the same construction as illustrated in Fig.1 and their detailed specifications are given in Table 1.

Table 2 shows the recipes for the base rubber used for the carcass plies, belt plies, and breaker plies.

Table 3 also shows the results of comparative testing wherein the test tyres, that is, working example tyre 1a and reference tyre 1a were identical with the working example tyre 1 and reference tyre 1 referred in table 1 except for their tread profiles.

In order to evaluate their bead durability, the test tyres were inflated to their regular internal air pressure, and were rotated to bead failure at a peripheral speed of 300 km/h and 200% of their regular load. The test results are also given in Table 1 and 3, where the bead durability is defined by the time at which a bead failure occurred, and is expressed by the relative value of the index number based on the assumption that the time for the reference tyre was 100.

In order to know the critical rotating speed over which the standing wave phenomenon is produced, the rotation speed of each test tyre was varied in a test. The critical rotating speed of the working example tyre reached up to approximately 300 km/h.

TABLE 1

| | Ex.1 | Ex.2 | Ex.3 | Ex.4 | Ex.5 | Ex.6 | Ref.1 |
|---|---|---|---|---|---|---|---|
| **TEST RESULTS** | | | | | | | |
| Bead Durability | 110 | 120 | 140 | 140 | 140 | 150 | 100 |
| Cornering Force | 100 | 100 | 100 | 120 | 70 | 100 | 100 |
| **CARCASS** | 6 plies | 6 plies | 6 plies | 6 plies | 6 plies | 6 plies | 6 plies |
| Carcass cord | | | | | | | |
| Material | Nylon66 | Nylon66 | Nylon66 | Nylon66 | Nylon66 | Nylon66 | Nylon66 |
| Structure | 1890d/3 | 1890d/3 | 1890d/3 | 1890d/3 | 1890d/3 | 1890d/3 | 1890d/3 |
| Twist (turns/100mm) | 26 | 28 | 34 | 34 | 34 | 36 | 23 |
| S5 (%) | 6.2 | 6.7 | 7.7 | 7.7 | 7.7 | 8.0 | 4.5 |
| S10 (%) | 9.5 | 10.5 | 11.7 | 11.7 | 11.7 | 12.1 | 7.5 |
| S20 (%) | 14.7 | 15.7 | 17.5 | 17.5 | 17.5 | 18.3 | 11.2 |
| D5 (%/d) $\times 10^{-4}$ | 9.84 | 10.47 | 11.32 | 11.32 | 11.32 | 11.43 | 7.32 |
| D10 (%/d) $\times 10^{-4}$ | 15.08 | 16.41 | 17.20 | 17.20 | 17.20 | 17.29 | 12.20 |
| D20 (%/d) $\times 10^{-4}$ | 23.33 | 23.09 | 25.74 | 25.74 | 25.74 | 26.14 | 16.00 |
| Elongation at breakage (%) | 24.8 | 25.7 | 26.8 | 26.8 | 26.8 | 27.2 | 19.6 |
| Strength (kgf) | 48.2 | 46.2 | 43.8 | 43.8 | 43.8 | 42.5 | 54.0 |
| Initial elastic modulus (kgf/sq.mm) | 175 | 165 | 145 | 145 | 145 | 140 | 270 |
| **BELT LAYER** | 8 plies | 8 plies | 8 plies | 8 plies | 8 plies | 8 plies | 8 plies |
| Belt cord | | | | | | | |
| Material | Nylon66 | Nylon66 | Nylon66 | Nylon66 | Nylon66 | Nylon66 | Nylon66 |
| Structure | 1680d/4 | 1680d/4 | 1680d/4 | 1680d/4 | 1680d/4 | 1680d/4 | 1680d/4 |
| S5 (%) | 4.8 | 4.8 | 4.8 | 4.8 | 4.8 | 4.8 | 4.1 |
| S10 (%) | 8.2 | 8.2 | 8.2 | 8.2 | 8.2 | 8.2 | 6.8 |
| S20 (%) | 11.3 | 11.3 | 11.3 | 11.3 | 11.3 | 11.3 | 9.7 |
| D5 (%/d) $\times 10^{-4}$ | 6.03 | 6.03 | 6.03 | 6.03 | 6.03 | 6.03 | 5.38 |
| D10 (%/d) $\times 10^{-4}$ | 9.36 | 9.36 | 9.36 | 9.36 | 9.36 | 9.36 | 8.72 |
| D20 (%/d) $\times 10^{-4}$ | 14.49 | 14.49 | 14.49 | 14.49 | 14.49 | 14.49 | 12.44 |
| Elongation at breakage (%) | 22.4 | 22.4 | 22.4 | 22.4 | 22.4 | 22.4 | 17.2 |
| Strength (kgf) | 52.5 | 52.5 | 52.5 | 52.5 | 52.5 | 52.5 | 56.5 |
| Initial elastic modulus (kgf/sq.mm) | 234 | 234 | 234 | 234 | 234 | 234 | 320 |
| **CUT BREAKER** | 2 plies | 2 plies | 2 plies | 4 plies | 0 | 2 plies | 2 plies |
| Breaker cord | | | | | | | |
| Material | Nylon66 | Nylon66 | Nylon66 | Nylon66 | | Nylon66 | Nylon66 |
| Structure | 1680d/4 | 1680d/4 | 1680d/4 | 1680d/4 | | 1680d/4 | 1680d/4 |
| S5 (%) | 4.8 | 4.8 | 4.8 | 4.8 | | 4.8 | 4.1 |
| S10 (%) | 8.2 | 8.2 | 8.2 | 8.2 | | 8.2 | 6.8 |
| S20 (%) | 11.3 | 11.3 | 11.3 | 11.3 | | 11.3 | 9.7 |
| D5 (%/d) $\times 10^{-4}$ | 6.03 | 6.03 | 6.03 | 6.03 | | 6.03 | 5.38 |
| D10 (%/d) $\times 10^{-4}$ | 9.36 | 9.36 | 9.36 | 9.36 | | 9.36 | 8.72 |
| D20 (%/d) $\times 10^{-4}$ | 14.49 | 14.49 | 14.49 | 14.49 | | 14.49 | 12.44 |
| Elongation at breakage (%) | 22.4 | 22.4 | 22.4 | 22.4 | | 22.4 | 17.2 |
| Strength (kgf) | 52.5 | 52.5 | 52.5 | 52.5 | | 52.5 | 56.5 |
| Initial elastic modulus (kgf/sq.mm) | 234 | 234 | 234 | 234 | | 234 | 320 |

TABLE 2

| | parts by weight |
|---|---|
| Natural rubber | 80 |
| Isoprene rubber | 20 |
| Carbon LM-HAF | 67.5 |
| Stearic acid | 2 |
| Zinc oxide | 10 |
| Sulfur | 6 |
| Accelerator | 1.0 |
| 100% modulus | 60 kgf/sq.cm |
| Elongation at breakage | 270 % |
| Strength | 186 kgf/sq.cm |

TABLE 3

| | Ex.1A | Ref.1A |
|---|---|---|
| TEST RESULT | | |
| Bead Durability | 120 | 100 |
| TREAD PROFILE | | |
| RC100/RC5 | 1.09 | 1.03 |
| (RC100-RS100)/RC100 | .04 | .01 |
| RT5 | 1000mm | 800mm |
| CARCASS | 6 plies | 6 plies |
| Carcass cord | | |
| Material | Nylon66 | Nylon66 |
| Structure | 1890d/3 | 1890d/3 |
| Elongation @ 5kgf load | 6.2% | 4.5% |
| Elongation @ 10kgf load | 9.5% | 7.5% |
| Elongation @ breakage | 24.8% | 19.6% |
| Tensile strength | 48.2kgf | 54.0kgf |
| Initial elastic modulus | 175kgf/sq.mm | 270kgf/sq.mm |
| BELT LAYER | 8 plies | 8 plies |
| Belt cord | | |
| Material | Nylon66 | Nylon66 |
| Structure | 1680d/4 | 1680d/4 |
| Elongation @ 5kgf load | 4.8% | 4.1% |
| Elongation @ 10kgf load | 8.2% | 6.8% |
| Elongation @ breakage | 22.4% | 17.2% |
| Tensile strength | 52.5kgf | 56.5kgf |
| Initial elastic modulus | 234kgf/sq.mm | 320kgf/sq.mm |
| CUT BREAKER | 2 plies | 2 plies |
| Breaker cord | | |
| Material | Nylon66 | Nylon66 |
| Structure | 1890d/3 | 1890d/3 |

In the present invention, elastic cords of higher elasticity are used for the carcass cords. Accordingly, the carcass cords are greater in elongation when they are subjected to a low load, and the carcass is

11

provided with a greater elongation in advance by tyre inflation. As a result, the bead portions were greatly improved in their durability.

Further, the belt tension is increased and that increases the critical rotating speed of the tyre over which the standing wave phenomenon occurs which further improves the durability of the bead portions.

In the tyre having carcass cords of conventional properties, the bead portions were subjected to complicated stresses owing to the standing wave phenomenon as well as compressive stresses exerted upon the turnup portions of the carcass cords in the bead portions, whereas in the present invention, the carcass cords having the higher elasticity reduced the application of compressive stresses to the cords and the occurrence of standing wave phenomenon was restrained.

Moreover, in the present invention, the tread profile is arranged to increase the expansion of the tread portion particularly in the clown region, thereby increasing the critical rotating speed of the tyre over which the standing wave phenomenon is created. Therefore, there is restrained the decreased in the durability of the bead portions which can be caused by the transmission of the undulating operation of the standing wave phenomemon to the bead portions through the sidewalls and as a result, the bead portions are also improved in their durability.

As is apparent from the foregoing description, the present invention comprises a basic arrangement in which then carcass cords of higher elasticity are used, and a second arrangement in which the tread surface is allowed to jut out in the crown region thereof as a result of the inflation of the tyre. Both of these arrangements co-operate with each other to ensure that the task of the present invention in which the durability of the bead portions is improved is achieved.

## Claims

1. A heavy duty high speed radial tyre comprising a radial carcass (7) having at least one ply of cords arranged at an angle of 70 to 90 degrees to the tyre equator, and turned up at both edge portions around a pair of bead cores (2) respectively to be secured thereto, and a belt layer (10) comprising a plurality of plies of cords arranged at an angle of 0 to 20 degrees to the tyre equator characterised in that each of the carcass cords has an elongation S5 under 5 kgf load of 5 to 8%, an elongation S10 under 10 kgf load of 9 to 15% and an elongation S20 under 20 kgf load of 14 to 20%, wherein the rate of change of the elongation decrease smoothly as the load increases, the initial modulus of elasticity of each carcass cord is 130 to 200 kgf/mm$^2$, and the number of twists of each carcass cord is 25 to 36T/10cm.

2. A heavy duty high speed radial tyre comprising a radial carcass (7) having at least one ply of cords arranged at an angle of 70 to 90 degrees to the tyre equator, and turned up at both edge portions around a pair of bead cords (2) respectively to be secured thereto, and a belt layer (10) comprising a plurality of plies of cords arranged at an angle of 0 to 20 degrees to the tyre equator characterised in that each of the carcass cords has the following characteristics that the quotient D5 of the elongation S5 of the carcass cord when loaded with a 5 kgf load as a percentage divided by the thickness of the carcass cord in denier is $7.35 \times 10^{-4}$ to $14.17 \times 10^{-4}$, the quotient D10 of the elongation S10 of the carcass cord when loaded with a 10 kgf load as a percentage divided by the thickness of the carcass cord in denier is $13.2 \times 10^{-4}$ to $22.1 \times 10^{-4}$, the quotient D20 of the elongation S20 of the carcass cord when loaded with a 20 kgf load as a percentage divided by the thickness of the carcass cord in denier is $20.6 \times 10^{-4}$ to $29.4 \times 10^{-4}$, wherein the rate of change of the quotient of the elongation of the carcass cord under load as a percentage divided by thickness of the cord in denier decreases smoothly as the load increases.

3. A tyre according to claim 2 characterised in that the quotient D5 of the elongation of each belt cord when loaded with 5 kgf load as a percentage divided by the thickness of the belt cord in denier is $3.85 \times 10^{-4}$ to $7.69 \times 10^{-4}$.

4. A tyre according to claim 2 or 3 characterised in that the quotient D10 of the elongation S10 of each belt cord when loaded with a 10 kgf load as a percentage divided by the thickness of the belt cord in denier is $6.41 \times 10^{-4}$ to $10.26 \times 10^{-4}$ and the quotient D20 of the elongation S20 of the belt cord when loaded with a 20 kgf load as a percentage divided by the thickness of the carcass cord in denier is $10.26 \times 10^{-4}$ to $59 \times 10^{-4}$.

**5.** A tyre according to any one of claims 2 to 4 characterised in that the carcass cords are embedded in a base rubber which consists of 100 parts by weight of the base including at least one kind of rubber selected from natural rubber and isoprene rubber and 50 to 70 parts by weight of carbon black, the 100% modulus of the base rubber is 30 to 70 kgf/cm$^2$ and the elongation of the base rubber at breakage is 200 to 500%.

**6.** A tyre according to any one of claims 1 to 5 characterised by a tread (5) disposed radially outside the belt layer (10) so that in a tyre section including the tyre axis under an initial state in which the tyre is inflated to 5% of its regular internal air pressure the said tread portion (5) is provided with one of

(a) a crown swelling profile in which

RC5 > RS5 and RT5 $\geqq$ 800mm

or

(b) a flat profile in which

RC5 = RS5

or

(c) a crown sinking profile in which

RC5 < RS5

for the tread profile under said initial state, and said tread profile under the initial state and the tread profile under the regular state for use when the tyre is inflated to 100% of its said regular internal air pressure, satisfying the following conditions:-

RC100/RC5 > 1.06
(RC100-RS100)/RC100 $\geqq$ 0.02

where
RC5 is the radius of the tyre on the surface of the tread portion at the tyre equator under the initial state,
RS5 is the radius of the tyre on the surface of the tread portion at the edges PS5 of a crown region thereof under the initial state,
RT5 is the radius of curvature of the crown region under the initial state,
RC100 is the radius of the tyre on the surface of the tread portion at the tyre equator under the regular state, and
RS100 is the radius of the tyre on the surface of the tread portion at the edges PS100 of the crown region under the regular state.

**7.** A tyre according to any one of claims 1 to 6 characterised in that a cut breaker (14) composed of at least one ply of cords inclined at an angle of 10 to 45 degrees to the tyre equator is disposed between the carcass and the belt layer.

**8.** A tyre according to any one of claims 1 to 7 characterised in that the belt layer (10) is provided with an auxiliary belt (12) comprising a ply of auxiliary cords (13) positioned radially outside the belt layer (10).

**Patentansprüche**

**1.** Ein Schwerlast-Hochgeschwindigkeitsradialreifen mit einer radialen Karkasse (7), die wenigstens eine Kordlage aufweist, die unter einem Winkel von 70 bis 90 Grad zum Reifenäquator angeordnet ist und an beiden Randabschnitten um ein Paar von Wulstkernen (2) herum umgeschlagen ist, um jeweils daran befestigt zu sein, und einer Gürtellage (10) mit einer vielzahl von Kordlagen, die unter einem Winkel von 0 bis 20 Grad zum Reifenäquator angeordnet sind,
dadurch **gekennzeichnet,**
daß jeder der Karkassenkorde eine Dehnung S5 unter eine 5 kgf-Belastung von 5 bis 8%, eine Dehnung S10 unter einer 10 kgf-Belastung von 9 bis 15% und eine Dehnung S20 unter einer 20 kgf-Belastung von 14 bis 20% besitzt, wobei die Änderungsrate der Dehnung gleichmäßig abnimmt, während die Belastung ansteigt, der Anfangselastizitätsmodul jedes Karkassenkords 130 bis 200 kgf/mm$^2$ und die Anzahl von Verdrehungen jedes Karkassenkords 25 bis 36T/10cm beträgt.

2.  Ein Schwerlast-Hochgeschwindigkeitsradialreifen mit einer radialen Karkasse (7), die wenigstens eine Kordlage aufweist, die unter einem Winkel von 70 bis 90 Grad zum Reifenäquator angeordnet ist und an beiden Randabschnitten um ein Paar von Wulstkernen (2) herum umgeschlagen ist, um jeweils daran befestigt zu sein, und einer Gürtellage (10) mit einer Vielzahl von Kordlagen, die unter einem Winkel von 0 bis 20 Grad zum Reifenäquator angeordnet sind,
    dadurch **gekennzeichnet,**
    daß jeder der Karkassenkorde die folgenden Charakteristiken aufweist, und zwar, daß der Quotient D5 der Dehnung S5 des Karkassenkords, wenn er mit einer 5 kgf-Belastung belastet ist, als ein Prozentsatz dividiert durch die Dicke des Karkassenkords in Denier $7.35 \times 10^{-4}$ bis $14.17 \times 10^{-4}$, der Quotient D10 der Dehnung S10 des Karkassenkords, wenn er mit einer 10 kgf-Belastung belastet ist, als ein Prozentsatz dividiert durch die Dicke des Karkassenkords in Denier $13.2 \times 10^{-4}$ bis $22.1 \times 10^{-4}$, und der Quotient D20 der Dehnung S20 des Karkassenkords, wenn er mit einer 20 kgf-Belastung belastet ist, als ein Prozentsatz dividiert durch die Dicke des Karkassenkords in Denier $20.6 \times 10^{-4}$ bis $29.4 \times 10^{-4}$ beträgt, wobei die Änderungsrate des Quotients der Dehnung des Karkassenkords unter Belastung als ein Prozentsatz dividiert durch die Dicke des Kords in Denier gleichmäßig abnimmt, während die Belastung ansteigt.

3.  Ein Reifen nach Anspruch 2,
    dadurch **gekennzeichnet,**
    daß der Quotient D5 der Dehnung jedes Gürtelkords, wenn er mit einer 5 kgf-Belastung belastet ist, als ein Prozentsatz dividiert durch die Dicke des Gürtelkords in Denier $3.85 \times 10^{-4}$ bis $7.69 \times 10^{-4}$ beträgt.

4.  Ein Reifen nach Anspruch 2 oder 3,
    dadurch **gekennzeichnet,**
    daß der Quotient D10 der Dehnung S10 jedes Gürtelkords, wenn er mit einer 10 kgf-Belastung belastet ist, als ein Prozentsatz dividiert durch die Dicke des Gürtelkords in Denier $6.41 \times 10^{-4}$ bis $10.26 \times 10^{-4}$ und der Quotient D20 der Dehnung S20 des Gürtelkords, wenn er mit einer 20 kgf-Belastung belastet ist, als ein Prozentsatz dividiert durch die Dicke des Karkassenkords in Denier $10.26 \times 10^{-4}$ bis $59 \times 10^{-4}$ beträgt.

5.  Ein Reifen nach einem der Ansprüche 2 bis 4,
    dadurch **gekennzeichnet,**
    daß die Karkassenkorde in ein Basisgummi eingebettet sind, welches aus 100 Gewichtsteilen der Basis, die wenigstens eine Art von Gummi einschließt, die aus natürlichem Gummi und Isoprengummi ausgewählt wird, und 50 bis 70 Gewichtsteilen Kohlenstoffruß besteht, der 100%-Modul des Basisgummis 30 bis 70 kgf/cm$^2$ und die Dehnung des Basisgummis bei Bruch 200 bis 500% beträgt.

6.  Ein Reifen nach einem der Ansprüche 1 bis 5,
    **gekennzeichnet** durch
    eine Lauffläche (5), die radial außerhalb der Gürtellage (10) angeordnet ist, so daß in einem die Reifenachse einschließenden Reifenschnitt unter einem Ahfangszustand, in dem der Reifen auf 5% seines regulären Innenluftdrucks aufgepumpt ist, der Laufflächenabschnitt (5) versehen ist mit
    (a) einem Kronenschwellprofil, in dem

    RC5 > RS5 und RT5 ≧ 800 mm,

    oder
    (b) einem flachen Profil, in dem

    RC5 = RS5,

    oder
    (c) einem Kronensenkprofil, in dem

RC5 < RS5,

für das Laufflächenprofil unter dem Anfangszustand, und das Laufflächenprofil unter dem Anfangszustand und das Laufflächenprofil unter dem regulären Zustand für eine Benutzung, wenn der Reifen auf 100% seines regulären Innenluftdrucks aufgepumpt ist, die folgenden Bedingungen erfüllen:

RC100/RC5 > 1.06
(RC100-RS100)/RC100 ≧ 0.02

wobei
RC5 der Radius des Reifens auf der Oberfläche des Laufflächenabschnitts am Reifenäquator unter dem Anfangszustand ist,
RS5 der Radius des Reifens auf der Oberfläche des Laufflächenabschnitts an den Rändern PS5 eines Kronenbereichs davon unter dem Anfangszustand ist,
RT5 der Krümmungsradius des Kronenbereichs unter dem Anfangszustand ist,
RC100 der Radius des Reifens auf der Oberfläche des Laufflächenabschnitts am Reifenäquator unter dem regulären Zustand ist, und
RS100 der Radius des Reifens auf der Oberfläche des Laufflächenabschnitts an den Rändern PS100 des Kronenbereichs unter dem regulären Zustand ist.

7. Ein Reifen nach einem der Ansprüche 1 bis 6,
dadurch **gekennzeichnet,**
daß ein geschnittener Breaker (14), der aus wenigstens einer Kordlage besteht, die unter einem Winkel von 10 bis 45 Grad zum Reifenäquator geneigt ist, zwischen der Karkasse und der Gürtellage angeordnet ist.

8. Ein Reifen nach einem der Ansprüche 1 bis 7,
dadurch **gekennzeichnet,**
daß die Gürtellage (10) mit einem Hilfsgürtel (12) versehen ist, der eine Lage von Hilfskorden (13) umfaßt, die radial außerhalb der Gürtellage (10) angeordnet ist.

**Revendications**

1. Pneumatique à carcasse radiale pour lourdes charges et vitesses élevées, comprenant une carcasse radiale (7) ayant au moins une nappe de câblés faisant un angle de 70 à 90° avec l'équateur du pneumatique et repliée aux deux parties de bord autour de deux tringles (2) afin qu'elle soit fixée à celles-ci, et une couche de ceinture (10) comprenant plusieurs nappes de câblés faisant un angle de 0 à 20° avec l'équateur du pneumatique, caractérisé en ce que chacun des câblés de carcasse a un allongement S5 sous une charge de 49 N (5 kgf) compris entre 5 et 8 %, un allongement S10 sous une charge de 98 N (10 kgf) compris entre 9 et 15 %, et un allongement S20 sous une charge de 196 N (20 kgf) compris entre 14 et 20 %, et la vitesse de variation d'allongement diminue régulièrement lorsque la charge augmente, le module initial d'élasticité de chaque câblé de carcasse est compris entre $1,3.10^9$ et $2,0.10^9$ Pa (130 à 200 kgf/mm$^2$), et le nombre de torsions de chaque câblé de carcasse est compris entre vingt-cinq et trente-six torsions par fraction de 10 mm.

2. Pneumatique à carcasse radiale pour lourdes charges et vitesses élevées, comprenant une carcasse radiale (7) ayant au moins une nappe de câblés faisant un angle de 70 à 90° avec l'équateur du pneumatique et repliée aux deux parties de bord autour de deux tringles (2) afin qu'elle soit fixée à celles-ci, et une couche de ceinture (10) comprenant plusieurs nappes de câblés faisant un angle de 0 à 20° avec l'équateur du pneumatique, caractérisé en ce que chacun des câblés de carcasse a les caractéristiques suivantes : le quotient D5 de l'allongement S5 du câblé de carcasse soumis à une charge de 49 N (5 kgf) sous forme d'un pourcentage et de l'épaisseur du câblé de carcasse exprimée en deniers est compris entre $7,35.10^{-4}$ et $14,17.10^{-4}$, le quotient D10 de l'allongement S10 du câblé de carcasse sous une charge de 98 N (10 kgf) exprimé sous forme d'un pourcentage et de l'épaisseur du câblé de carcasse exprimée en deniers est compris entre $13,2.10^{-4}$ et $22,1.10^{-4}$, et le quotient D20 de l'allongement S20 du câblé de carcasse sous une charge de 196 N (20 kgf) exprimé sous forme d'un pourcentage et de l'épaisseur du câblé de carcasse exprimée en deniers est compris entre $20,6.10^{-4}$ et $29,4.10^{-4}$, si bien que la vitesse de variation du quotient de l'allongement du câblé de carcasse sous charge exprimé en pourcentage et de l'épaisseur du câblé exprimée en deniers diminue progressivement lorsque la charge augmente.

3. Pneumatique selon la revendication 2, caractérisé en ce que le quotient D5 de l'allongement de chaque câblé de ceinture soumis à une charge de 49 N (5 kgf) exprimé sous forme d'un pourcentage et de l'épaisseur du câblé de ceinture exprimée en deniers est compris entre $3,85.10^{-4}$ et $7,69.10^{-4}$.

4. Pneumatique selon la revendication 2 ou 3, caractérisé en ce que le quotient D10 de l'allongement S10 de chaque câblé de ceinture soumis à une charge de 98 N (10 kgf) exprimé sous forme d'un pourcentage et de l'épaisseur du câblé de ceinture exprimée en deniers est compris entre $6,41.10^{-4}$ et $10,26.10^{-4}$, et le quotient D20 de l'allongement S20 du câblé de ceinture soumis à une charge de 196 N (20 kgf) exprimé par un pourcentage et de l'épaisseur du câblé de carcasse exprimée en deniers est compris entre $10,26.10^{-4}$ et $59.10^{-4}$.

5. Pneumatique selon l'une quelconque des revendications 2 à 4, caractérisé en ce que les câblés de carcasse sont enrobés dans un caoutchouc de base qui contient 100 parties en poids de caoutchouc de base contenant au moins un type de caoutchouc choisi parmi le caoutchouc naturel et le caoutchouc d'isoprène, et 50 à 70 parties en poids de noir de carbone, le module à 100 % du caoutchouc de base étant compris entre $3,0.10^6$ et $7,0.10^6$ Pa (30 à 70 kgf/cm$^2$), et l'allongement du caoutchouc de base à la rupture est compris entre 200 et 500 %.

6. Pneumatique selon l'une quelconque des revendications 1 à 5, caractérisé par une bande de roulement (5) disposée radialement à l'extérieur de la bande de ceinture (10) afin que, dans la section du pneumatique, comprenant l'axe du pneumatique, à un état initial dans lequel le pneumatique est gonflé à 5 % de sa pression interne normale, la partie de bande de roulement (5) comporte soit
    (a) un profil de partie centrale bombée tel que

RC5 > RS5 et RT5 ≧ 800 mm

soit
(b) un profil plat tel que

RC5 = RS5,

soit
(c) un profil à partie centrale en creux tel que

RC5 < RS5

pour le profil de bande de roulement à l'état initial, et le profil de bande de roulement à l'état initial et le profil de bande de roulement à l'état gonflé normalement, destiné à être utilisé lorsque le pneumatique est gonflé à 100 % de sa pression interne normale, correspond aux conditions suivantes :

RC100/RC5 > 1,06
(RC100 - RS100)/RC100 ≧ 0,02

RC5 étant le rayon du pneumatique à la surface de la partie de bande de roulement à l'équateur à l'état initial, RS5 étant le rayon du pneumatique à la surface de la partie de bande de roulement aux bords PS5 de la région centrale à l'état initial, RT5 étant le rayon de courbure de la région centrale à l'état initial, RC100 étant le rayon du pneumatique à la surface de la partie de bande de roulement à l'équateur à l'état normal, et RS100 étant le rayon du pneumatique à la surface de la partie de bande de roulement aux bords PS100 de la région centrale à l'état normal.

7. Pneumatique selon l'une quelconque des revendications 1 à 6, caractérisé en ce qu'une nappe sommet coupée (14) composée d'au moins une nappe de câblés faisant un angle de 10 à 45° avec l'équateur du pneumatique est disposée entre la carcasse et la couche de ceinture.

8. Pneumatique selon l'une quelconque des revendications 1 à 7, caractérisé en ce que la couche de ceinture (10) a une ceinture auxiliaire (12) comprenant une nappe de câblés auxiliaires (13) placée radialement à l'extérieur de la couche de ceinture (10).

FIG.1

# FIG.2 A

# FIG.2 B

# FIG.3

FIG.4

# FIG.5

# FIG.6

12

10

# FIG.7

12 b

12 a

# FIG.8

12a

12a

# FIG.9

A

B

C

# FIG.10